# EUROPÄISCHE PATENTSCHRIFT

(11) **EP 1 585 624 B1**
(45) Veröffentlichungstag und Bekanntmachung des Hinweises auf die Patenterteilung: **22.02.2012**
(21) Anmeldenummer: 04703090.3
(22) Anmeldetag: 17.01.2004
(51) Int. Cl.: B29C 45/26, F16F 1/06, F16F 1/02, B29D 99/00

(54) **ALS SPRITZGUSSTEIL AUSGEBILDETE SCHRAUBENDRUCKFEDER**
SCREW COMPRESSION SPRING EMBODIED AS AN INJECTION-MOULDED PART
RESSORT DE COMPRESSION HELICOIDAL SE PRESENTANT SOUS LA FORME D'UNE PIECE MOULEE PAR INJECTION

(30) Priorität: 22.01.2003 DE 20300922 U
(43) Veröffentlichungstag der Anmeldung: 19.10.2005
(73) Patentinhaber: Friedhelm Piepenstock GmbH, 58579 Schalksmühle (DE)
(72) Erfinder: PIEPENSTOCK, Friedhelm, 58579 Schalksmühle (DE); PIEPENSTOCK, Reiner, 58579 Schalksmühle (DE); PIEPENSTOCK, Peter, 58579 Schalksmühle (DE)
(74) Vertreter: Dörner, Lothar
(86) Internationale Anmeldenummer: PCT/DE2004/000061
(87) Internationale Veröffentlichungsnummer: WO 2004/065095

(56) Entgegenhaltungen:
- DE-C- 4 409 443
- US-A- 5 122 052
- PATENT ABSTRACTS OF JAPAN Bd. 2002, Nr. 05, 3. Mai 2002 (2002-05-03) & JP 2002 013569 A (PENTEL CORP), 18. Januar 2002 (2002-01-18)
- PATENT ABSTRACTS OF JAPAN Bd. 2000, Nr. 21, 3. August 2001 (2001-08-03) & JP 2001 099207 A (TOYO SEIKAN KAISHA LTD), 10. April 2001 (2001-04-10)

## Beschreibung

Die Erfindung betrifft eine als Spritzgusstell ausgebildete Schraubendruckfeder mit mehreren Windungen und mit planen Endscheiben, wobei eine Axialebene der Schraubendruckfeder in der Teilungsebene der Spritzgießform ausgerichtet ist.

Eine derartige Schraubendruckfeder ist aus der DE 44 09 443 C1 bekannt. Die Teilungsebene des Spritzgießwerkzeugs liegt in einer Axialebene der Schraubendruckfeder. Bei der Förmung der Formkammem durch Erodieren wird eine Kupferelektrode In Form der Schraubendruckfeder jeweils zur Hälfte in eine Formkammer eingesenkt. Im Anschluss an die Teilungsebene weist das Profil des Windungsgangs in Bezug auf die Endformungsrichtung Hinterschneidungen auf, die sich in der Form In ungünstiger Weise zeigen und die zu einem ungleichmäßigen Profil des Windungsgangs der geformten Schraubendruckfeder führen.

Weitere Schraubenfedern der gattungsgemäßen Art sind offenbart in der US-A-5 122052 sowie in der JP 2002 013569 A.

Aufgabe der Erfindung ist im Bereich der Teilungsebene eine hinterschneidungsfreie Formgebung des Windungsgangs der Schraubendruckfeder in Entformungsrichtung.

Diese Aufgabe wird nach der Erfindung dadurch gelöst, dass die an die Teilungsebene anschließenden Abschnitte der Windungen mindestens an einer Seite eine geringere Steigung als der Windungsgang aufweisen.

Die Erfindung unterscheidet sich insofern vom Stand der Technik, als die in ansteigender Richtung von der Teilungsebene ausgehende Wandung des Windungsgangs durch eine geringere Steigung abgeflacht ist, sodass keine Hinterschneidung vorhanden ist. Infolgedessen ist ein einwandfreies und hinterschneidungsfreies Erodieren der Formkammer möglich. Diese Formgebung mit gleich bleibendem Querschnitt des Windungsgangs sichert eine lückenlose Blockstellung der Schraubendruckfeder, sodass die Einbauhöhe genau eingehalten werden kann. Die Schraubendruckfeder ist gegen seitliches Ausweichen gesichert. Der nutzbare Federweg wird vergrößert. Das Entformen der Schraubengänge wird erleichtert, sodass ein wirtschaftliches Verhältnis von Spritzgießwerkzeuggröße zur Zuhaltekraft der Spritzgießmaschine gesichert ist.

Einen vollkommen gleichmäßigen Querschnitt des Gewindegangs erzielt man dadurch, dass die Abschnitte insgesamt eine geringe Steigung aufweisen.

Eine vollständige Verhinderung der Hinterschneidung ist dadurch gesichert, dass die Steigung der Abschnitte im Wesentlichen den Wert "0" hat.

Die Hinterschneidung lässt sich auch bei geringfügiger Änderung des Querschnitts dadurch vermeiden, dass die von der Teilungsebene ausgehende ansteigende Wandung der Abschnitte eine geringe Steigung mit einer anschließenden Stufe aufweisen.

Ausführungsbeispiele werden anhand der Zeichnungen erläutert, in denen darstellen:
- Fig. 1: eine Ansicht eines ersten Ausführungsbeispiels einer Schraubendruckfeder,
- Fig. 2: eine Seitenansicht zu Fig. 1,
- Fig. 3: eine Stirnansicht der Schraubendruckfeder,
- Fig. 4: eine perspektivische Ansicht der Schraubendruckfeder,
- Fig. 5: eine Ansicht eines zweiten Ausführungsbeispiels einer Schraubendruckfeder,
- Fig. 6: eine Seitenansicht zu Fig. 5,
- Fig. 7: eine Stirnansicht der Schraubendruckfeder,
- Fig. 8: eine perspektivische Ansicht der Schraubendruckfeder.

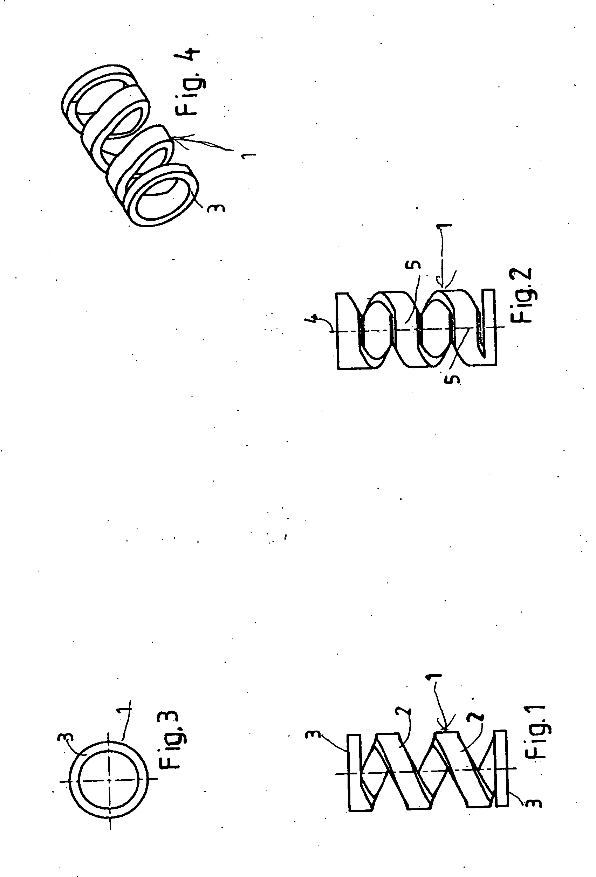

Das erste Ausführungsbeispiel nach den Fig. 1 bis 4 zeigt eine Schraubendruckfeder 1 als Spritzgussformteil mit mehreren Windungen 2 mit einem Rechteckquerschnitt und planen Endscheiben 3. Die Teilungsebene 4 des Formwerkzeugs ist senkrecht zur Zeichenebene der Fig. 2 ausgerichtet. Jeweils im Anschluss an die Teilungsebene 4 sind die Abschnitte 5 des Windungsgangs mit verringerter Steigung ausgebildet. Die Steigung kann den Wert "0" haben. Man erkennt unmittelbar aus Fig. 2, dass im Bereich der Teilungsebene in Entformungsrichtung keine Hinterschneidung des Windungsgangs vorhanden sind.

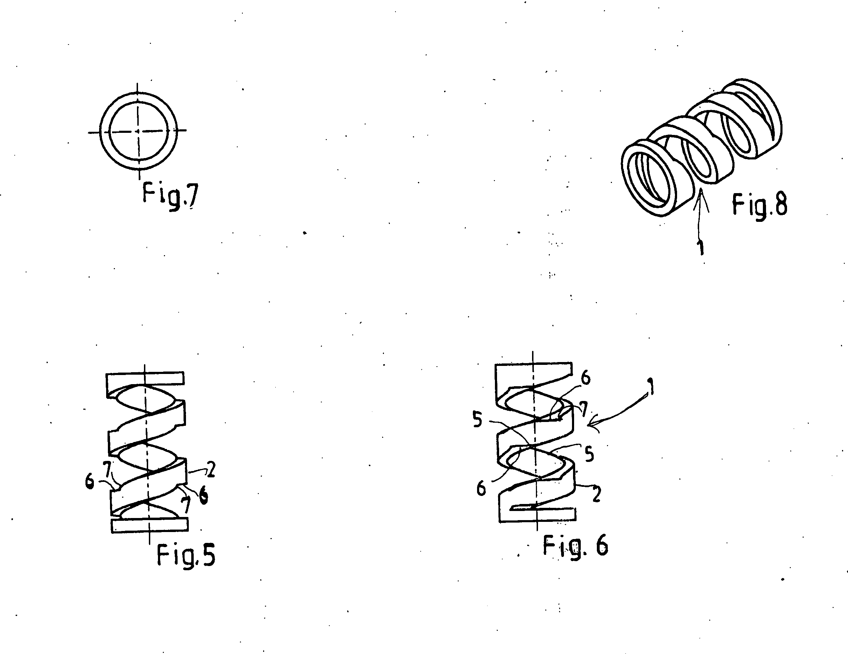

Das Ausführungsbeispiel nach den Figuren 5 bis 8 sieht in den Abschnitten 5 jeweils in der von der Teilungsebene 4 ausgehenden, ansteigenden Wandung des Windungsgangs eine geringere Steigung 6 mit einer anschließenden Stufe 7 vor. Damit lässt sich, wie man unmittelbar aus den Figuren 5 und 6 erkennt, ebenfalls eine Hinterschneidung vermeiden.

## Patentansprüche

1. Schraubendruckfeder (1), die als Spritzgussteil ausgebildet ist, mit genau einem schraubenlinienförmigen Federkörper mit mehreren Windungen (2) und mit planen Endscheiben (3), **dadurch gekennzeichnet, dass** eine Axialebene der Schraubendruckfeder in der Teilungsebene der Spritzgießform ausgerichtet ist, und die an die Teilungsebene anschließenden Abschnitte der Windungen mindestens an einer Seite der Teilungsebene eine im Verhältnis zur Steigung der Windung geringere Steigung aufweisen.

2. Schraubendruckfeder nach Anspruch 1, **dadurch gekennzeichnet, dass** jede Windung (2) Abschnitte (5) aufweist, die im Verhältnis zur Steigung der Windung (2) eine geringere Steigung aufweisen.

3. Schraubendruckfeder nach Anspruch 2, **dadurch gekennzeichnet, dass** die Steigung der Abschnitte (5) im Wesentlichen den Wert "O" hat.

4. Schraubendruckfeder nach Anspruch 1, **dadurch gekennzeichnet, dass** die Abschnitte (5) mit geringer Steigung am jeweiligen Übergang zur Windungssteigung in Richtung positiver Windungssteigung an ihrem Anfang an ihrer Unterseite und an ihrem Ende an ihrer Oberseite eine Stufe (7) aufweisen.

## Claims

1. Screw compression spring (1) embodied as an injection-moulded part with exactly one helical spring body with several coils (2) and with flat end plates (3) **characterised in that** one axial plane of the screw compression spring is aligned in the parting plane of the injection-moulding die and the sections of the coils adjoining the parting plane have, on at least one side of the parting plane, a lower pitch in relation to the pitch of the coil.

2. Screw compression spring according to claim 1 **characterised in that** each coil (2) has sections (5) which have a lower pitch with reference to the pitch of the coil (2).

3. Screw compression spring according to claim 2 **characterised in that** the pitch of the sections (5) has substantially the value "O".

4. Screw compression spring according to claim 1 **characterised in that** the sections (5) with the lesser pitch have a step (7) at each point of transition to the coil pitch in the direction of the positive coil pitch, which at their beginning, lies on the lower side and at their end, on the upper side.

## Revendications

1. Ressort de compression hélicoïdal (1) se présentant sous la forme d'une pièce moulée par injection, avec exactement un corps de ressort en forme d'hélice à plusieurs spires (2) et avec des rondelles terminales (3) planes, **caractérisé en ce qu'**un plan axial du ressort de compression hélicoïdal est orienté dans le plan de division du moule à injection, et **en ce que** les segments des spires dans le prolongement du plan de division présentent au moins sur un côté du plan de division un pas proportionnellement inférieur au pas de la spire.

2. Ressort de compression hélicoïdal selon la revendication 1, **caractérisé en ce que** chaque spire (2) présente des segments (5) qui eux-mêmes présentent un pas proportionnellement inférieur au pas de la spire (2).

3. Ressort de compression hélicoïdal selon la revendication 2, **caractérisé en ce que** le pas des segment (5) a essentiellement la valeur « O ».

4. Ressort de compression hélicoïdal selon la revendication 1, **caractérisé en ce que** les segments (5) de faible pas présentent, au niveau de la transition respective vers le pas de spire en direction du pas de spire positif, un gradin (7) situé contre leur face inférieure à leur commencement, et contre leur face supérieure à leur fin.
